# EUROPÄISCHE PATENTSCHRIFT

(11) **EP 1 629 263 B1**
(45) Veröffentlichungstag und Bekanntmachung des Hinweises auf die Patenterteilung: **13.04.2016**
(21) Anmeldenummer: 04739166.9
(22) Anmeldetag: 11.05.2004
(51) Int. Cl.: G01M 3/20

(54) **LECKSUCHGERÄT**
LEAK DETECTING DEVICE
APPAREIL DE DETECTION DE FUITE

(30) Priorität: 30.05.2003 DE 10324596
(43) Veröffentlichungstag der Anmeldung: 01.03.2006
(73) Patentinhaber: Inficon GmbH, 50968 Köln (DE)
(72) Erfinder: BÖHM, Thomas, 50859 Köln (DE); GRO E BLEY, Werner, 53125 Bonn (DE)
(74) Vertreter: von Kreisler Selting Werner - Partnerschaft von Patentanwälten und Rechtsanwälten mbB
(86) Internationale Anmeldenummer: PCT/EP2004/005008
(87) Internationale Veröffentlichungsnummer: WO 2004/106882

(56) Entgegenhaltungen:
- WO-A-01/46667
- WO-A-96/24828
- US-A- 5 585 548

## Beschreibung

Die Erfindung bezieht sich auf ein Lecksuchgerät nach dem Gegenstromprinzip.

Ein derartiges Lecksuchgerät ist aus WO 96/24828 bekannt. Bei einem Lecksuchgerät dieser Art kann die Empfindlichkeit bzw. die Nachweisgrenze des Lecksuchgerätes eingestellt werden. Zu diesem Zweck ist die Hochvakuumpumpe, deren Einlass mit einem Massenspektrometer und deren Auslass mit einer Vorvakuumpumpe verbunden ist, mit einem Zwischeneinlass versehen, der über eine Verbindungsleitung mit dem Lecksuchgerät-Eingang verbunden ist. Im Verlauf der Verbindungsleitung ist ein in bezug auf seinen Leitwert einstellbares Ventil vorgesehen. Das einstellbare Ventil dient als einstellbare Drossel, während der Druck am Lecksuchgerät-Eingang so hoch ist, dass eine ungedrosselte Verbindungsleitung in dem Massenspektrometer zu einem zu hohen Innendruck führen würde, bei dem das Massenspektrometer nicht arbeitet. Aus Kostengründen ist der Innendurchmesser des Ventiles auf einen möglichst geringen Durchmesser begrenzt. Hierdurch bleibt jedoch auch bei völlig geöffnetem Ventil eine nennenswerte Drosselwirkung erhalten, durch die das Saugvermögen verringert ist.

In WO 01/46667 A1 ist ein Lecksuchgerät beschrieben, das nach dem Teilstrom-Prinzip arbeitet. Hierbei sind zwei Vorvakuumpumpen vorgesehen, durch die jeweils ein Teilstrom geführt wird. Die eine Vorvakuumpumpe ist in Reihe mit einem Drosselventil geschaltet, welches durch ein Parallelventil überbrückt wird. Das Drosselventil und das Parallelventil sind abwechselnd geöffnet. Bei der Groblecksuche ist nur das Drosselventil geöffnet, während ein Umgehungsleitungsventil ebenfalls geöffnet ist. Bei der empfindlichen Lecksuche sind das Umgehungsleitungsventil und das Drosselventil geschlossen. Die Umschaltung von Drosselventil und Parallelventil dient der Änderung des Messbereichs.

Ein ähnliches Lecksuchgerät ist beschrieben in DE 44 42 174 A1. Auch dieses Lecksuchgerät arbeitet nach dem Teilstrom-Prinzip. Es weist ein Drosselventil und ein Parallelventil auf, die wechselseitig geschaltet werden, um den Messbereich zu verändern.

Aufgabe der Erfindung ist es, ein preiswertes Lecksuchgerät zu schaffen, dessen Saugvermögen verbessert ist.

Diese Aufgabe wird erfindungsgemäß mit den Merkmalen des Patentanspruches 1 gelöst.

Das erfindungsgemäße Lecksuchgerät weist im Verlauf der Verbindungsleitung ein zweites Ventil auf, das parallel zu dem einstellbaren ersten Ventil angeordnet ist. Durch das zweite Ventil wird der Gesamtleitwert aller geöffneten Ventile im Verlauf der Verbindungsleitung erheblich vergrößert, so dass auch mit relativ preiswerten Ventilen geringen Innendurchmessers ein guter Gesamtleitwert realisiert werden kann. Auf diese Weise kann der Einsatz eines einzigen sehr teuren Ventiles mit einem großen Innendurchmesser, d. h. mit einem hohen Leitwert, vermieden werden. Beide Ventile sind parallel zueinander angeordnet, d. h. liegen parallel zueinander im Verlauf der einzigen Verbindungsleitung zwischen dem Lecksuchgerät-Eingang und dem einzigen Zwischeneinlass der Hochvakuumpumpe.

Bei Lecksuchgeräten mit einer Trockenläuferpumpe, beispielsweise einer Membranpumpe, als Vorvakuumpumpe, wird eine an den Lecksuchgerät-Eingang angeschlossene Prüfkammer durch die Vorvakuumpumpe zunächst bis hinab auf ca. 10 - 5 mbar evakuiert. Sobald dieser Druckbereich erreicht bzw. unterschritten wird, wird das einstellbare erste Ventil langsam geöffnet. Die Regelung des einstellbaren Ventiles kann in Abhängigkeit vom Eingangsdruck erfolgen, d. h. in Abhängigkeit von dem Druck, der am Eingang des Lecksuchgerätes vorliegt. Durch das nicht vollständige Öffnen des einstellbaren ersten Ventiles kann bereits bei Vorvakuumdruck-Werten, die noch deutlich oberhalb des am Zwischeneingang der Hochvakuumpumpe maximal zulässigen Druckes liegen, eine Messung begonnen werden, da das einstellbare erste Ventil als Drossel wirkt. Durch die Drosselwirkung wird am Zwischeneinlass der Hochvakuumpumpe ein so niedriger Druck erzeugt, dass auch im Massenspektrometer der maximal zulässige Druck unterschritten bleibt und das Massenspektrometer bereits mit der Messung beginnen kann. Der Leitwert des einstellbaren Ventiles in der Verbindungsleitung wird so eingestellt, dass er möglichst hoch ist, jedoch der maximal zulässige Druck in dem Massenspektrometer nicht überschritten wird. Sobald der Vorvakuumdruck-Wert einen festgelegten Grenzwert unterschreitet, kann das einstellbare Ventil vollständig geöffnet und das zweite Ventil ebenfalls vollständig geöffnet werden. Hierdurch wird der Gesamtleitwert der beiden Ventile in der Verbindungsleitung deutlich erhöht, so dass auch das Saugvermögen der Hochvakuumpumpe voll ausgenutzt werden kann.

Bei ölgedichteten Vorvakuumpumpen wird der Lecksuchgerät-Eingang bis ungefähr 1 mbar evakuiert, und bei Unterschreiten dieses Druckes zunächst das einstellbare erste Ventil und später das zweite Ventil im Verlauf der Verbindungsleitung geöffnet. Hierdurch wird frühzeitig ein empfindliches Messen ermöglicht. Ab einem Druck von 10⁻² mbar können beide parallele Ventile vollständig geöffnet werden, um ein möglichst großes Saugvermögen an dem Lecksuchgerät-Eingang zur Verfügung zu stellen.

Durch Vorsehen eines zweiten Ventiles parallel zu dem ersten einstellbaren Ventil wird bei geöffneten Ventilen ein hoher Leitwert realisiert, wobei gleichzeitig Ventile mit relativ geringem Leitungsdurchmesser bzw. -querschnitt verwendet werden, die preiswert verfügbar sind.

Gemäß einer bevorzugten Ausgestaltung ist das zweite Ventil ein Schaltventil, das zwischen einem offenen und einem geschlossenen Zustand schaltbar ist. Das zweite Ventil dient der Leitwerterhöhung der gesamten Ventilanordnung. Es kann daher beim zweiten Ventil auf ein einstellbares Ventil verzichtet werden und ein preiswertes Schaltventil verwendet werden.

Vorzugsweise ist das einstellbare erste Ventil stufenlos einstellbar. Hierdurch kann das erste Ventil stufenlos an die Druckverhältnisse angepasst werden

Gemäß einer bevorzugten Ausgestaltung ist der Innendurchmesser des ersten und des zweiten Ventiles jeweils kleiner als 13 mm. Ventile mit einem Innendurchmesser von weniger als 13 mm sind relativ preiswert, so dass die gesamte Ventilanordnung in der Verbindungsleitung auf diese Weise preiswerter realisierbar ist als in Form eines einzigen Ventiles mit entsprechend vergrößertem Innendurchmesser.

Vorzugweise ist eine Regelvorrichtung mit einem Modulationsmodul vorgesehen, das die Öffnung des einstellbaren ersten Ventils steuert und den Gasstrom durch das einstellbare erste Ventil moduliert. Durch eine Modulation des Gasstromes durch die Verbindungsleitung in den Zwischeneinlass der Hochvakuumpumpe kann die Empfindlichkeit erhöht werden, da durch die Modulation das Nutzsignal aus dem Gesamtsignal herausgefiltert werden kann. Die Modulation durch das einstellbare erste Ventil kann bei geöffnetem oder bei geschlossenem zweiten Ventil erfolgen.

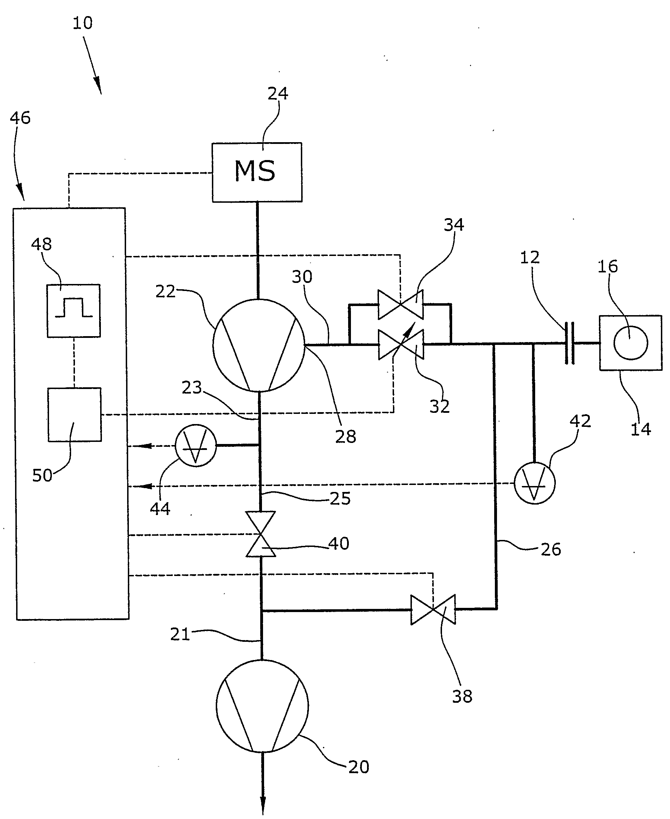

Im folgenden wird unter Bezugnahme auf die Zeichnung ein Ausführungsbeispiel der Erfindung näher erläutert. Es zeigt ein Auführungsbeispiel eines Lecksuchgerätes nach dem Gegenstromprinzip gemäß der Erfindung.

In der Figur ist ein Lecksuchgerät 10 dargestellt, das einen Lecksuchgerät-Eingang 12 aufweist, an den eine Prüfkammer 14 mit einem Prüfling 16 angeschlossen ist. Der Prüfling 16 enthält ein Testgas, beispielsweise Helium, von dem bereits geringe Mengen durch das Lecksuchgerät 10 detektiert werden.

Das Lecksuchgerät 10 wird im wesentlichen gebildet von einer Vorvakuumpumpe 20, einer Hochvakuumpumpe 22 und einem Massenspektrometer 24, die in dieser Reihenfolge durch Gasleitungen miteinander verbunden sind. Ferner ist zwischen dem Lecksuchgerät-Eingang 12 und einem Einlass 21 der Vorvakuumpumpe 20 eine Umgehungsleitung 26 sowie zwischen dem Lecksuchgerät-Eingang 12 und einem Zwischeneinlass 28 der Hochvakuumpumpe 22 eine Verbindungsleitung 30 vorgesehen. Im Verlauf der Verbindungsleitung 30 sind zwei Ventile angeordnet, nämlich ein in bezug auf seinen Leitwert stufenlos einstellbares erstes Ventil 32 und, parallel hierzu, ein zweites Ventil 34, das als Schaltventil ausgebildet ist. Im Verlauf der Umgehungsleitung 26 ist ein Umgehungsleitung-Sperrventil 38 und in der Leitung 25 zwischen dem Vorvakuumpumpen-Einlass 21 und einem Hochvakuumpumpen-Auslass 23 ein Hochvakuumpumpen-Sperrventil 40 vorgesehen. Zur Druckbestimmung ist am Lecksuchgerät-Eingang 12 ein Prüfkammerdruck-Messgerät 42 sowie am Auslass 23 der Hochvakuumpumpe 22 ein Vorvakuumdruck-Messgerät 44 vorgesehen. Zur Steuerung und Regelung des Lecksuchgerätes 10 ist eine Regelvorrichtung 46 vorgesehen, die u. a. ein Modulationsmodul 48 und ein Ventilsteuerungsmodul 50 aufweist. Die Hochvakuumpumpe 22 ist eine Turbomolekularpumpe, kann jedoch auch als Reibungsvakuumpumpe anderer Bauart ausgebildet sein.

Die Vorvakuumpumpe 20 ist als Trockenläuferpumpe, beispielsweise als Membranpumpe, ausgebildet, kann jedoch als ölgedichtete Vorvakuumpumpe ausgebildet sein.

Das einstellbare erste Ventil 32 ist ein stufenlos steuerbares Proportionalventil mit einem Innendurchmesser von 6 mm. Das zweite Ventil 34 ist ein Schaltventil, zwischen einem vollständig geöffneten und vollständig geschlossenen Zustand schaltbar, und hat ebenfalls einen Innendurchmesser von 6 mm.

Das Vorvakuumdruck-Messgerät 44 und das Prüfkammerdruck-Messgerät 42 sind durch entsprechende Signalleitungen mit der Regelvorrichtung 46 verbunden.

Die beiden Sperrventile 38,40 sowie die beiden Ventile 32,34 im Verlauf der Verbindungsleitung 30 sind über entsprechende Steuerleitungen mit der Regelvorrichtung 46 verbunden.

Zur Durchführung einer Lecksuche mit dem Lecksuchgerät 10 wird die Prüfkammer 14 mit einem das Testgas Helium enthaltenden Prüfling 16 an den Lecksuchgerät-Eingang 12 angeschlossen. Sowohl das Hochvakuumpumpen-Sperrventil 40 als auch die beiden in der Verbindungsleitung 30 angeordneten Ventile 32,34 sind zunächst geschlossen, während das Umgehungsleitung-Sperrventil 38 geöffnet ist. Die Vorvakuumpumpe 20 wird eingeschaltet und evakuiert über die Umgehungsleitung 26 die Prüfkammer 14. Sobald das Prüfkammerdruck-Messgerät 42 einen Druck von unter 5 mbar feststellt, wird das Hochvakuumpumpen-Sperrventil 40 geöffnet, so dass Testgas im Gegenstrom durch die Hochvakuumpumpe 22 zu dem Detektor, dem Massenspektrometer 24, gelangen und dort detektiert werden kann. Das Umgehungsleitungs-Sperrventil 38 wird geschlossen.

Ab einem Prüfkammerdruck von 5 mbar abwärts wird durch die Regelvorrichtung 46 und das Ventilsteuerungsmodul 50 das bezüglich seines Leitwertes einstellbare erste Ventil 32 langsam geöffnet. Das erste Ventil 32 wird jeweils nur soweit geöffnet, dass der Gasdruck am Zwischeneinlass 28 der Hochvakuumpumpe 22 unterhalb eines Druckwertes liegt, bei dem noch ein ausreichend niedriger Druck in dem Massenspektrometer 24 sichergestellt ist. Mit weiter abnehmendem Prüfkammerdruck wird das erste Ventil 32 weiter geöffnet, so dass der Leitwert des ersten Ventiles 32 zunimmt. Sobald der Prüfkammerdruck den maximal zulässigen Druck am Zwischeneinlass 28 erreicht hat, wird das erste Ventil 32 vollständig geöffnet und wird das zweite Ventil 34 ebenfalls geöffnet. Durch die Öffnung des zweiten Ventiles 34 wird der Gesamtleitwert der aus den beiden Ventilen 32,34 der Verbindungsleitung 30 bestehenden Ventilanordnung sofort deutlich erhöht, so dass das Saugvermögen der Hochvakuumpumpe 22 durch die vollständig geöffneten Ventile 32,34 nicht verschlechtert wird.

Die Regelung und Öffnung der beiden Ventile 32,34 in der Verbindungsleitung 30 erfolgt durch die Regelvorrichtung 46 in Abhängigkeit vom Prüfkammerdruck automatisch.

Zur Erhöhung der Messempfindlichkeit kann durch das Modulationsmodul 48 das Ventilsteuerungsmodul 50 derart angesteuert werden, dass das erste einstellbare Ventil 32 hinsichtlich seines Leitwertes mit konstanter Frequenz moduliert wird, und zwar bei geöffnetem oder geschlossenem zweiten Ventil 34. Das von dem Massenspektrometer 24 generierte Messsignal wird in der Regelvorrichtung 46 entsprechend gefiltert, so dass nur das Nutzsignal zur Auswertung zur Verfügung steht.

## Patentansprüche

1. Lecksuchgerät (10) nach dem Gegenstromprinzip, mit
einer Hochvakuumpumpe (22), deren Einlass (21) mit einem Massenspektrometer (24) verbunden ist,
einer Vorvakuumpumpe (20), deren Einlass (21) mit einem Auslass (23) der Hochvakuumpumpe (22) und über ein Umgehungsleitungs-Sperrventil (38) mit einem Lecksuchgerät-Eingang (12) verbunden ist,
einer Verbindungsleitung (30) zwischen dem Lecksuchgerät-Eingang (12) und einem Zwischeneinlass (28) der Hochvakuumpumpe (22),
einem in Bezug auf seinen Leitwert einstellbaren ersten Ventil (32) im Verlauf der Verbindungsleitung (30), und
einer Regelvorrichtung (46) mit einem Ventilsteuerungsmodul (50)
**dadurch gekennzeichnet,**
**dass** ein zweites Ventil (34) im Verlauf der Verbindungsleitung (30) vorgesehen ist, das parallel zu dem einstellbaren ersten Ventil (32) angeordnet ist, und dass das erste Ventil (32), das zweite Ventil (34) und das Umgehungsleitungs-Sperrventil (38) derart von dem Ventilsteuerungsmodul (50) angesteuert werden, dass sobald der an dem Lecksuchgerät-Eingang (12) anliegende Prüfkammerdruck den maximal zulässigen Druck am Zwischeneinlass (28) erreicht hat, das erste Ventil (32) vollständig geöffnet wird und das zweite Ventil (34) ebenfalls geöffnet wird, während das Umgehungsleitungs-Sperrventil (38) geschlossen ist.

2. Lecksuchgerät (10) nach Anspruch 1, **dadurch gekennzeichnet, dass** das zweite Ventil (34) ein Schaltventil ist, das in einen vollständig geöffneten oder in einen vollständig geschlossenen Zustand geschaltet werden kann.

3. Lecksuchgerät (10) nach einem der Ansprüche 1 oder 2, **dadurch gekennzeichnet, dass** der Leitwert des einstellbaren ersten Ventils (32) stufenlos einstellbar ist.

4. Lecksuchgerät (10) nach einem der Ansprüche 1 - 3, **dadurch gekennzeichnet, dass** der Innendurchmesser der Ventile (32,34) kleiner als 13 mm ist.

5. Lecksuchgerät (10) nach einem der Ansprüche 1 - 4, **dadurch gekennzeichnet, dass** die Vorvakuumpumpe (20) eine ölgedichtete Pumpe ist.

6. Lecksuchgerät (10) nach einem der Ansprüche 1 - 4, **dadurch gekennzeichnet, dass** die Vorvakuumpumpe (20) eine Trockenläuferpumpe ist.

7. Lecksuchgerät (10) nach Anspruch 1 - 6, **dadurch gekennzeichnet, dass** eine Regelvorrichtung (46) mit einem Modulationsmodul (48) vorgesehen ist, das die Öffnung des einstellbaren ersten Ventils (32) steuert und den Gasstrom durch das einstellbare erste Ventil (32) moduliert.

## Claims

1. Leak detecting device (10) of the counterflow type, comprising
a high vacuum pump (22) having an inlet (21) connected to a mass spectrometer (24),
a prevacuum pump (20) having an inlet (21) connected to an outlet (23) of the high vacuum pump (22) and, via a bypass-conduit check valve (38), to a leak detecting device input (12),
a connecting conduit (30) between the leak detecting device input (12) and an intermediate inlet (28) of the high vacuum pump (22),
a first valve (32) in the course of the connecting conduit (30), said first valve having an adjustable conductance, and
a control device (46) comprising a valve control module (50).
**characterized in**
**that**, in the course of the connecting conduit (30), a second valve (34) is provided which is arranged parallel to the adjustable first valve (32), and that the first valve (32), the second valve (34) and the bypass-conduit check valve (38) are controlled by the valve control module (50) in such a manner that, when the test chamber pressure prevailing at the leak detecting device input (12) has reached the maximum allowable pressure at the intermediate inlet (28), the first valve (32) is fully opened and the second valve (34) is also opened while the bypass-conduit check valve (38) is closed.

2. The leak detecting device (10) according to claim 1, **characterized in that** the second valve (34) is a switch valve that is adapted to be switched into a fully opened or into a fully closed state.

3. The leak detecting device (10) according to any one of claims 1 or 2, **characterized in that** the conductance of the adjustable first valve (32) is continuously adjustable.

4. The leak detecting device (10) according to any one of claims 1 - 3, **characterized in that** the inner diameter of the valves (32,34) is smaller than 13 mm.

5. The leak detecting device (10) according to any one of claims 1 - 4, **characterized in that** the prevacuum pump (20) is an oil-sealed pump.

6. The leak detecting device (10) according to any one of claims 1 - 4, **characterized in that** the prevacuum pump (20) is a dry-running pump.

7. The leak detecting device (10) according to any one of claims 1 - 6, **characterized in that** a control device (46) having a modulation module (48) is provided which controls the opening of the adjustable first valve (32) and modulates the gas flow through the adjustable first valve (32).

## Revendications

1. Appareil de recherche de fuites (10) fonctionnant selon le principe du contre-courant, avec
une pompe à vide poussé (22) dont l'entrée (21) est reliée à un spectromètre de masse (24),
une pompe à vide préliminaire (20) dont l'entrée (21) est reliée à une sortie (23) de la pompe à vide poussé (22) et, par une valve de blocage de conduit bypass (38), à une entrée de l'appareil de recherche de fuites (12),
une conduite de liaison (30) entre l'entrée de l'appareil de recherche de fuites (12) et une entrée intermédiaire (28) de la pompe à vide poussé (22),
une première valve (32) réglable par rapport à sa valeur de guide, dans le cours de la conduite de liaison (30) et
un dispositif de réglage (46) avec un module de commande de valve (50),
**caractérisé en ce qu'**une deuxième valve (34) est prévue dans le cours de la conduite de liaison (30), qui est disposée parallèlement à la première valve réglable (32), et **en ce que** la première valve (32), la deuxième valve (34) et la valve de blocage de conduit bypass (38) sont commandées par le module de commande de valve (50) de telle façon que, dès que la pression de chambre de test appliquée à l'entrée de l'appareil de recherche de fuites (12) a atteint la pression autorisée maximale à l'entrée intermédiaire (28), la première valve (32) est entièrement ouverte et la deuxième valve (34) est également ouverte, alors que la valve de blocage de conduit bypass (38) est fermée.

2. Appareil de recherche de fuites (10) selon la revendication 1, **caractérisé en ce que** la deuxième valve (34) est une valve de commutation qui peut être commandée en un état entièrement ouvert ou entièrement fermé.

3. Appareil de recherche de fuites (10) selon l'une des revendications 1 ou 2, **caractérisé en ce que** la valeur guide de la première valve réglable (32) est réglable de manière continue.

4. Appareil de recherche de fuites (10) selon l'une des revendications 1 à 3, **caractérisé en ce que** le diamètre intérieur des valves (32, 34) est inférieur à 13 mm.

5. Appareil de recherche de fuites (10) selon l'une des revendications 1 à 4, **caractérisé en ce que** la pompe à vide préliminaire (20) est une pompe à joint d'huile.

6. Appareil de recherche de fuites (10) selon l'une des revendications 1 à 4, **caractérisé en ce que** la pompe à vide préliminaire (20) est une pompe à garniture mécanique.

7. Appareil de recherche de fuites (10) selon l'une des revendications 1 à 6, **caractérisé en ce qu'**un dispositif de régulation (46) avec un module de modulation (48) est prévu, qui commande l'ouverture de la première valve réglable (32) et module le flux de gaz passant par la première valve réglable (32).
